# FASCICULE DE BREVET EUROPEEN

(11) **EP 1 519 865 B1**
(45) Date de publication et mention de la délivrance du brevet: **26.09.2007**
(21) Numéro de dépôt: 03738085.4
(22) Date de dépôt: 25.06.2003
(51) Int. Cl.: B60T 11/26

(54) **RESERVOIR DE LIQUIDE HYDRAULIQUE.**
AUSGLEICHBEHÄLTER FÜR HYDRAULIKFLÜSSIGKEIT
HYDRAULIC LIQUID RESERVOIR

(30) Priorité: 28.06.2002 FR 0208166
(43) Date de publication de la demande: 06.04.2005
(73) Titulaire: ROBERT BOSCH GMBH, 70442 Stuttgart (DE)
(72) Inventeur: COME, Philippe, F-60300 Senlis (FR); FRAISSE, Emmanuelle, F-75011 Paris (FR); GAFFE, François, F-93110 Rosny sous Bois (FR); DEMERSSEMAN, Remi, F-75004 Paris (FR)
(74) Mandataire: Hurwic, Aleksander Wiktor
(86) Numéro de dépôt international: PCT/EP2003/006688
(87) Numéro de publication internationale: WO 2004/002798

(56) Documents cités:
- US-A1- 2002 005 041
- PATENT ABSTRACTS OF JAPAN vol. 1999, no. 13, 30 novembre 1999 (1999-11-30) -& JP 11 208447 A (NABCO LTD), 3 août 1999 (1999-08-03)

## Description

L'invention concerne un réservoir de liquide hydraulique. Notamment, l'invention concerne un réservoir de liquide hydraulique d'un véhicule. L'invention a pour but de limiter les pertes de liquide hydraulique au sein d'un réservoir de liquide hydraulique. Plus précisément, l'invention a pour but de limiter les pertes de liquide hydraulique lorsque le véhicule est en marche. L'invention est plus particulièrement destinée au domaine de l'automobile mais peut également s'appliquer dans d'autres domaines.

Un réservoir de liquide hydraulique d'un véhicule est destiné à alimenter un circuit hydraulique de freinage. Notamment, le circuit hydraulique de freinage peut être un maître-cylindre relié à un dispositif de freinage comportant au moins une roue du véhicule. Pour alimenter le circuit hydraulique de freinage, le réservoir de liquide hydraulique alimente plus particulièrement, une chambre primaire et une chambre secondaire de ce même maître-cylindre. L'alimentation de ces chambres primaire et secondaire du maître-cylindre permet respectivement à un piston primaire et à un piston secondaire de comprimer un volume hydraulique contenu dans ces chambres et de rapprocher des patins de freins contre au moins un disque d'un moyeu d'une roue du véhicule. En comprimant un volume de liquide hydraulique, au moins une roue du véhicule est bloquée et le véhicule peut alors freiner.

Un réservoir comportant les caractéristiques principales du préambule de la revendication 1 est divulgué dans le document JP 11 20887 A.

Lors de l'utilisation du véhicule, on s'est rendu compte qu'il se produisait une perte anormale de liquide hydraulique à l'intérieur du réservoir. Cette perte en liquide hydraulique nécessite qu'un conducteur du véhicule vérifie régulièrement qu'un niveau de liquide hydraulique de freinage soit suffisant à l'intérieur du réservoir. Un niveau de liquide hydraulique de freinage est suffisant lorsqu'il y a une quantité suffisante de liquide hydraulique à l'intérieur du réservoir pour faire fonctionner le circuit hydraulique de freinage. Le niveau du liquide hydraulique doit alors être vérifié par un utilisateur du véhicule en comparant le niveau du liquide hydraulique avec un repère situé par exemple sur une paroi du réservoir. La vérification régulière du niveau en liquide hydraulique du réservoir ainsi qu'un rajout de liquide hydraulique, lorsque nécessaire, est fastidieuse pour assurer la sécurité d'un conducteur. D'autre part, l'ajout régulier de liquide hydraulique dans le réservoir peut devenir onéreux pour l'utilisateur du véhicule.

Or, lors de l'utilisation du véhicule, le volume de liquide hydraulique peut être amené à se déplacer à l'intérieur du réservoir. Plus particulièrement, le liquide hydraulique est amené au moins à se déplacer brusquement selon une direction d'avancement du véhicule, ou selon une direction opposée, en cas d'accélération ou décélération brutale du véhicule. Le liquide hydraulique peut également se déplacer latéralement selon la direction d'avancement du véhicule lorsque le véhicule roule dans un virage par exemple. Le réservoir peut également prendre une position oblique par rapport au niveau du liquide hydraulique dans le réservoir lorsque le véhicule roule sur une route inclinée.

En se déplaçant à l'intérieur du réservoir, le volume de liquide hydraulique peut être amené à recouvrir un orifice d'alimentation du réservoir. Le réservoir de liquide hydraulique comporte un orifice d'alimentation en liquide hydraulique fermé à l'aide d'un bouchon. Ce bouchon recouvre cet orifice d'alimentation le plus souvent par vissage. Lorsque le liquide recouvre l'orifice d'alimentation, du liquide hydraulique peut être amené à s'échapper du réservoir en s'infiltrant entre un filetage de l'orifice d'alimentation et un filetage du bouchon. Le liquide peut également s'échapper du réservoir par une mise à l'air creusée dans le bouchon. Cette mise à l'air forme un petit trou admettant une entrée d'air dans le réservoir. Cette mise à l'air a pour but de faciliter l'alimentation du circuit hydraulique en liquide hydraulique.

Pour éviter que le liquide s'échappe du réservoir, on pourrait augmenter le volume du réservoir verticalement par rapport au sens de déplacement du véhicule de manière à ce que le niveau du volume de liquide hydraulique à l'intérieur du réservoir n'atteigne pratiquement pas l'orifice d'alimentation du réservoir lors de l'utilisation du véhicule. Cependant, l'augmentation en volume d'un tel réservoir augmenterait l'encombrement d'un capot de véhicule. De plus, l'augmentation du volume du réservoir n'empêcherait pas totalement l'échappement du liquide hors du réservoir.

Pour résoudre ce problème d'échappement du liquide hors du réservoir, l'invention prévoit de compartimenter le réservoir au moyen d'au moins une cloison anti-débordement. Cette cloison anti-débordement forme un compartiment ouvert à l'intérieur du réservoir placé aux alentours et à proximité de l'orifice d'alimentation du réservoir. Cette cloison anti-débordement contourne au moins partiellement cet orifice d'alimentation de manière à ce que, lorsque le réservoir bascule selon au moins une direction donnée, une partie du volume d'air contenu dans le réservoir soit emprisonnée aux alentours de l'orifice d'alimentation du réservoir. Comme l'air est emprisonné, il ne peut rejoindre en d'autres endroits une partie la plus haute du réservoir. De ce fait, aucune dépression ne peut s'installer. Le réservoir fonctionne alors comme un baromètre à mercure dont le mercure ne s'échappe pas.

L'invention a donc pour objet une réservoir de liquide hydraulique d'un véhicule comportant les caractéristiques de la revendication 1.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figures 1a à 1b : une vue en coupe d'un réservoir de liquide hydraulique, selon l'invention ;
- Figure 1c : une vue de dessus d'un réservoir de liquide hydraulique;
- Figures 2a et 2b : une vue en coupe d'un réservoir de liquide hydraulique ;
- Figures 3a et 3b : une vue de dessus d'un réservoir de liquide hydraulique, selon une variante de l'invention.

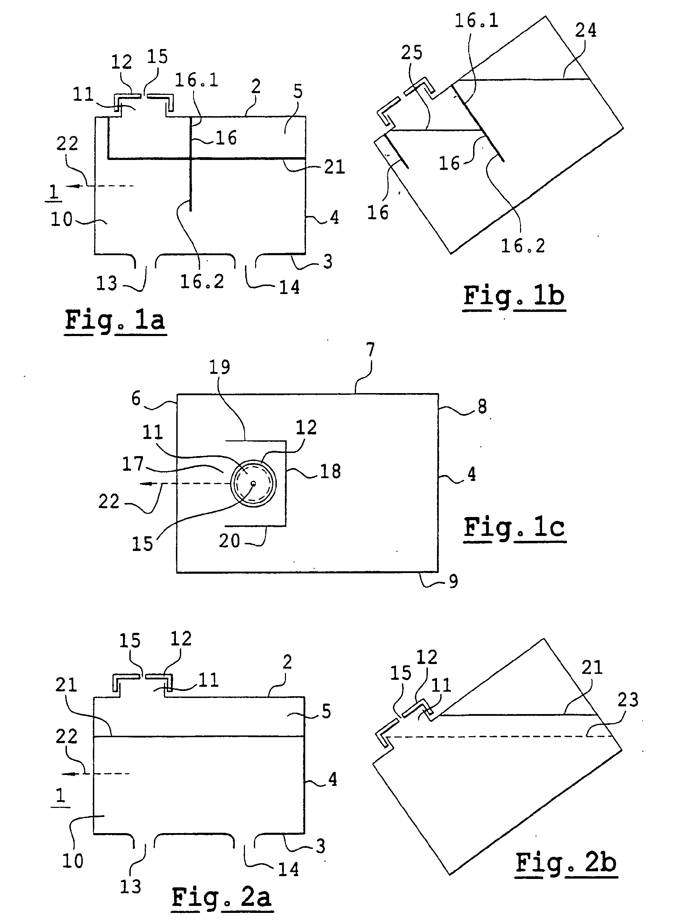

Les figures 1a à 1c montrent un réservoir de liquide hydraulique d'un véhicule. Le réservoir de liquide hydraulique 1 comporte, figure 1a, un plafond 2, un fond 3 et une paroi 4. Le fond, le plafond et la paroi délimitent un volume intérieur 5. Dans l'exemple figure 1a, le volume intérieur 5 comporte une forme cubique mais pourrait également comporter une forme sphérique. La paroi 4 est formée, dans cet exemple, de quatre côtés 6, 7, 8 et 9. Ces quatre côtés sont parallèles entre eux deux par deux. Dans l'exemple, les côtés 6 et 8 sont parallèles entre eux. Le plafond 2 et le fond 3 sont disposés selon un plan parallèle l'un par rapport à l'autre. La paroi 4 relie le plafond 2 au fond 3. Le réservoir de liquide hydraulique est rempli de liquide hydraulique 10. L'alimentation en liquide hydraulique s'effectue par l'intermédiaire d'un orifice d'alimentation 11 situé à un endroit sur le plafond 2. Dans l'exemple figure 1a, l'orifice d'alimentation est excentré. L'orifice d'alimentation peut également être placé à un autre endroit du réservoir. L'orifice d'alimentation est fermé par l'intermédiaire d'un bouchon 12 positionné sur l'orifice d'alimentation 11. Ce bouchon est inséré par vissage sur l'orifice d'alimentation 11 mais peut s'insérer par un tout autre moyen. Par exemple, le bouchon peut s'insérer par encastrement élastique ou clipsage.

Le volume de liquide hydraulique 10 est destiné à alimenter un circuit hydraulique de freinage. Par exemple un circuit hydraulique de freinage peut comporter un maître-cylindre et au moins une roue du véhicule (non représentés). Le volume de liquide hydraulique 10 est destiné à alimenter, plus particulièrement une chambre primaire et une chambre secondaire d'un maître-cylindre (non représentées) par l'intermédiaire d'un premier conduit 13 et d'un deuxième conduit 14. Pour faciliter le déplacement de ce volume hydraulique en direction du circuit hydraulique de freinage et pour faciliter le déplacement de ce volume hydraulique selon une direction opposée, le bouchon 12 est muni d'une mise à l'air 15 facilitant le déplacement du volume de liquide hydraulique sans contrainte à l'intérieur du réservoir.

Selon une caractéristique essentielle de l'invention, le réservoir est muni d'une cloison anti-débordement 16 fixée à l'intérieur du réservoir. La cloison anti-débordement comporte une partie supérieure 16.1 et une partie inférieure 16.2. La partie supérieure est proche du plafond. La partie inférieure est éloignée du plafond. Cette cloison anti-débordement 16 est fixée sur le plafond 2 par sa partie supérieure et contourne au moins partiellement l'orifice d'alimentation 11.

Sur une coupe vue du dessus du réservoir selon figure 1c qui est utile à la comprehension de l'invention, la cloison anti-débordement comporte une forme en U. La cloison anti-débordement forme un compartiment ouvert 17 à l'intérieur du réservoir. L'ouverture d'un tel compartiment permet d'alimenter en liquide hydraulique le réservoir en entier.

Dans l'exemple figure 1c, la forme en U comporte une première partie 18, une deuxième partie 19 et une troisième partie 20. La première partie 18 comporte un plan parallèle à un plan défini par deux des quatre côtés parallèles entre eux de la paroi 4. Dans l'exemple, les deux côtés parallèles à cette première partie 18 sont les côtés 6 et 8. La deuxième et troisième parties 19 et 20 sont perpendiculaires à la première partie 18 et comportent un plan parallèle au plan défini par deux autres côtés du réservoir. Dans l'exemple, les deux autres côtés sont les côtés 7 et 9. La cloison anti-débordement 16 forme un compartiment ouvert 17 à l'intérieur du réservoir délimité par les trois parties 18, 19 et 20 précédemment décrites.

Selon l'invention, la cloison anti-débordement 16 est fixée, de préférence, perpendiculairement sur le plafond du réservoir. Cette cloison anti-débordement pourrait également être fixée obliquement par rapport au plafond. La cloison anti-débordement est fixée, de préférence, au plafond du réservoir. Dans ce cas, la cloison contourne partiellement l'orifice. Cette cloison anti-débordement peut également être fixée seulement au plafond du réservoir.

Au repos, le liquide hydraulique dans le réservoir est situé à un niveau représenté par une ligne 21 figure 2a. Au repos, cette ligne 21 comporte un plan parallèle au plan défini par le plafond 2 et le fond 3. Lors d'une accélération ou d'une décélération du véhicule, le liquide a tendance à se plaquer contre un côté de la paroi du réservoir pour ensuite se replacer selon un plan qui peut être parallèle à un plan du réservoir au repos. Le liquide peut également se plaquer contre un côté du réservoir lorsque le véhicule roule une route inclinée.

Pour simuler une accélération ou une décélération du véhicule, on peur pencher le réservoir selon au moins une direction. Lorsque l'on penche le réservoir, on peut également simuler la position d'un tel réservoir lorsque le véhicule roule sur une route inclinée. Une direction selon laquelle le réservoir se penche vers la gauche du dessin est représentée par une flèche 22 en traits pointillés figures 1a et 2a.

Lorsque le réservoir est penché vers la gauche du dessin, le réservoir bascule autour du liquide hydraulique et le plafond du réservoir peut être recouvert en partie de liquide hydraulique, figures 1b et 2b.

Sans l'invention figure 2b, l'orifice d'alimentation 11 fermé par le bouchon du réservoir peut être recouvert par du liquide hydraulique lorsque le réservoir est penché selon la direction 22. Le niveau de liquide hydraulique 21 peut alors diminuer en un niveau 23. Le niveau 23 est représenté en traits en pointillés figure 2b. Le niveau de liquide hydraulique diminue du fait de la possibilité d'échange entre l'air et le liquide recouvrant l'orifice d'alimentation. En recouvrant l'orifice d'alimentation, le liquide peut s'infiltrer entre le filetage de l'orifice d'alimentation 11 du réservoir et le filetage du bouchon 12. Le liquide peut également s'infiltrer par la mise à l'air 15. Il se crée alors un débordement du réservoir.

Avec l'invention figure 1b, la cloison anti-débordement 16 empêche que le liquide ne recouvre au moins l'orifice d'alimentation et à un endroit situé dans la partie supérieure de la cloison anti-débordement. Lorsque le réservoir est penché selon la direction 22, la cloison anti-débordement 16 délimite un premier niveau 24 et un deuxième niveau 25. Le premier niveau 24 représente le niveau du liquide à l'extérieur du compartiment ouvert 17. Le deuxième niveau 25 est formé par le niveau de liquide à l'intérieur du compartiment ouvert 17 formé par la cloison anti-débordement 16.

La cloison anti-débordement permet d'emprisonner l'air à un endroit situé aux alentours de l'orifice d'alimentation. La cloison empêche ainsi l'orifice d'être submergé par le liquide hydraulique. Cependant, la cloison anti-débordement 16 selon la présente invention, permet d'éviter une fuite du liquide hydraulique vers l'extérieur du réservoir selon une seule direction 22.

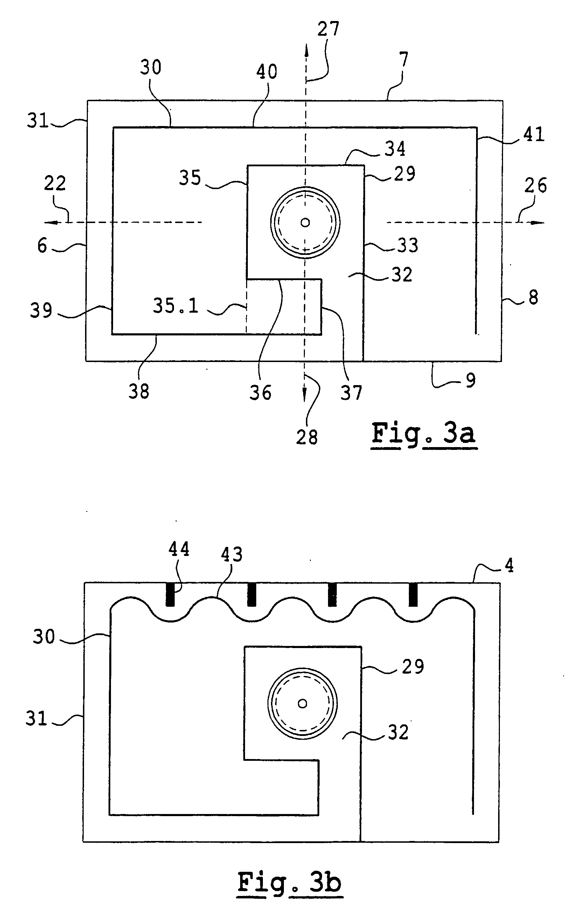

Or, lorsque le véhicule est en marche, le volume de liquide peut être déplacé suivant au moins quatre directions. Le liquide peut être déplacé suivant la direction 22 et suivant une direction opposée 26. Ces deux directions 22 et 26 peuvent correspondre au sens de déplacement du réservoir du véhicule lorsque le véhicule roule sur une route inclinée dans le sens d'une montée ou d'une descente. Le liquide hydraulique peut également être déplacé selon deux autres directions 27 et 28 opposées et perpendiculaires au sens de déplacement du véhicule. Les directions 26, 27 et 28 sont représentées par des flèches en pointillées figures 3a et 3b.

Pour éviter une perte de liquide hydraulique selon au moins l'une de ces quatre directions 22, 26, 27 et 28, l'invention prévoit également dans une variante, figures 3a et 3b, une cloison anti-débordement comportant une première portion 29 encerclant partiellement l'orifice d'alimentation 11 et une deuxième portion 30 contournant une périphérie 31 du réservoir. Une cloison anti-débordement ainsi réalisée permet de créer un parcours de l'air à l'intérieur du réservoir de manière à isoler l'orifice d'alimentation du reste du réservoir. Ce parcours est réalisé de telle manière qu'il permet au réservoir de basculer selon au moins quatre directions précédemment citées sans que le liquide ne recouvre l'orifice d'alimentation. Cette cloison anti-débordement réalise également un compartiment ouvert 32 à l'intérieur du réservoir. On entend par périphérie 31 du réservoir, un contour extérieur formé par les quatre côtés 6, 7, 8 et 9 de la paroi 4 du réservoir. Cette dernière variante présente l'avantage de pouvoir diminuer en hauteur le volume d'un tel réservoir, ce qui peut être utile pour diminuer verticalement, par rapport à la position du véhicule sur la route, l'encombrement d'un capot d'un véhicule. Cette cloison anti-débordement selon cette variante est fixée, de préférence, sur le plafond et sur le fond du réservoir.

Dans cette variante, la première portion 29 comporte quatre parties 33, 34, 35, 36 encerclant partiellement l'orifice d'alimentation et la deuxième portion 30 comporte quatre autres parties 38, 39, 40, 41. Ces deux portions sont reliées par une partie 37.

Une première partie 33 s'étend perpendiculairement depuis un endroit sur un des quatre côtés de la paroi du réservoir jusqu'à un endroit aux alentours de l'orifice d'alimentation. Dans l'exemple figure 3a, la partie 33 s'étend à partir du côté 9. Puis, cette première partie 33 est prolongée perpendiculairement par une deuxième partie 34 elle-même prolongée par une troisième partie 35 perpendiculaire à la deuxième partie 34 et parallèle à la première partie 33. Cette troisième partie 35 est prolongée perpendiculairement par une quatrième partie 36. Cette quatrième partie 36 est plus courte que la deuxième partie 34. Ces quatre parties 33, 34, 35 et 36 sont disposées de telle manière qu'elles encerclent partiellement l'orifice d'alimentation. La quatrième partie 36 est ensuite prolongée perpendiculairement par une cinquième partie 37 parallèle à la première partie 33 mais ne s'étendant pas jusqu'au côté 9 où est insérée la première partie 33. Cette cinquième partie 37 relie la portion 29 à la portion 30. Puis une sixième partie 38 prolonge perpendiculairement la cinquième partie 37. Une septième partie 39 prolonge perpendiculairement la sixième partie 38. Cette septième partie 39 est prolongée perpendiculairement par une huitième partie 40. La huitième partie est elle-même prolongée par une neuvième partie 41. La neuvième partie 41 ne rejoint pas un des quatre côtés de la paroi du réservoir. Les sixième, septième, huitième et neuvième parties sont disposées de manière à contourner la périphérie 31 du réservoir.

Lorsque l'on penche le réservoir selon la direction 26 figure 3a, la cloison anti-débordement permet d'emprisonner l'air entre la deuxième partie 34, la troisième partie 35 et la quatrième partie 36. Lorsque l'on penche le réservoir selon la direction 27, la cloison anti-débordement permet d'emprisonner l'air entre la première partie 33, la troisième partie 35 et la quatrième partie 36. La prolongation de la troisième partie 35 en une partie 35.1 pour rejoindre directement la sixième partie 38 en remplacement de la quatrième partie 36 entraînerait l'immersion de l'orifice d'alimentation par le liquide hydraulique selon la direction 26. Lorsque l'on penche le réservoir selon la direction 28, la cloison anti-débordement permet d'emprisonner l'air entre la première partie 33, la deuxième partie 34 et la troisième partie 35.

D'autres cloisons anti-débordement (non représentées) possédant une autre forme que celle précédemment décrite peuvent également être réalisées. Ces cloisons anti-débordement peuvent également permettre de créer un parcours de l'air à l'intérieur du réservoir de manière à isoler l'orifice d'alimentation 11 du reste du réservoir. Notamment, une autre cloison anti-débordement peut être réalisée de telle manière qu'elle comporte une forme de spirale. Dans cette forme, la cloison anti-débordement peut contourner partiellement l'orifice d'alimentation de telle manière que la cloison anti-débordement s'éloigne de l'orifice d'alimentation 11 en se rapprochant de la périphérie 31 du réservoir. La cloison anti-débordement ainsi formée peut se rapprocher de la périphérie du réservoir circulairement ou selon une forme rectangulaire.

Pour solidifier un tel réservoir et rendre plus résistant le réservoir à la forte pression susceptible de régner à l'intérieur du réservoir, il est possible de réaliser au moins une nervure de rigidification 44, figure 3b. Dans l'exemple, le réservoir peut comporter plusieurs nervures de rigidification 44. Ces nervures de rigidification sont fixées perpendiculairement à au moins un des quatre côtés de la paroi 4. Ces nervures de rigidification rigidifient le réservoir. Une rigidification du réservoir peut être importante du fait que le réservoir doit résister à de hautes pression pouvant régner au sein du réservoir lors du remplissage sur chaîne de fabrication automobile.

Dans une autre variante, il est possible de renforcer la rigidité du réservoir en réalisant au moins une ondulation 43 sur la cloison anti-débordement, figure 3b. Dans l'exemple figure 3b, une série d'ondulations peut être réalisée sur la portion 30 de la cloison anti-débordement. Ainsi, une nervure de rigidification peut être placée en regard de chaque ondulation.

## Revendications

1. Réservoir (1) de liquide hydraulique comportant :
- un plafond (2) et un fond (3),
- un orifice d'alimentation (11) en liquide hydraulique, lequel orifice d'alimentation est placé sur le plafond et débouchant à l'extérieur du réservoir, dans lequel une cloison anti-débordement (16) est fixée à l'intérieur du réservoir au moins sur le plafond et contourne au moins partiellement l'orifice d'alimentation **caractérisé en ce que** la cloison anti-débordement comporte une première portion (29) contournant partiellement l'orifice d'alimentation et une deuxième portion (30) contournant une périphérie (31) du réservoir.

2. Réservoir selon la revendication 1 **caractérisé en ce que** la cloison anti-débordement est fixée perpendiculairement sur le plafond du réservoir.

3. Réservoir selon l'une des revendications 1 à 2 **caractérisé en ce que** la cloison anti-débordement comporte une forme en U.

4. Réservoir selon l'une des revendications 1 à 3 **caractérisé en ce que** la cloison anti-débordement est fixée sur un fond du réservoir.

5. Réservoir selon l'une des revendications 1 à 3 **caractérisé en ce que** la cloison anti-débordement est fixée uniquement au plafond du réservoir.

6. Réservoir selon l'une des revendications 1 à 5 **caractérisé en ce que** le réservoir comporte une paroi reliant le plafond au fond, laquelle paroi est munie de nervures de rigidification (44) fixées, de préférence, perpendiculairement.

7. Réservoir selon la revendication 6 **caractérisé en ce que** la deuxième portion de la cloison anti-débordement contournant la périphérie du réservoir comporte une série d'ondulations (43).

8. Réservoir selon la revendication 7 **caractérisé en ce que** chaque ondulation de la deuxième portion de la cloison anti-débordement est positionnée de manière à être placée en regard d'une nervure de rigidification (44).

## Claims

1. A hydraulic fluid tank (1) comprising:
- a ceiling (2) and a bottom (3); and
- a hydraulic fluid feed orifice (11), which feed orifice is placed in the ceiling and opens out to the outside of the tank, in which an anti-overflow partition (16) is placed inside the tank extending at least from the ceiling and surrounding the feed orifice at least in part **characterized in that** the anti-overflow partition comprises a first portion (29) extending part of the way around the feed orifice and a second portion (30) extending around a periphery (31) of the tank.

2. A tank according to claim 1, **characterized in that** the anti-overflow partition is fixed perpendicularly to the ceiling of the tank.

3. A tank according to claim 1 or claim 2, **characterized in that** the anti-overflow partition is U-shaped.

4. A tank according to any one of claims 1 to 3, **characterized in that** the anti-overflow partition is fixed to the bottom of the tank.

5. A tank according to any one of claims 1 to 3, **characterized in that** the anti-overflow partition is fixed solely to the ceiling of the tank.

6. A tank according to any one of claims 1 to 5, **characterized in that** the tank includes a wall connecting the ceiling to the bottom, which wall is provided with stiffening ribs (44) that are preferably fixed perpendicularly thereto.

7. A tank according to claim 6, **characterized in that** the second portion of the anti-overflow partition surrounding the periphery of the tank includes a series of corrugations (43).

8. A tank according to claim 7, **characterized in that** each corrugation in the second portion of the anti-overflow partition is positioned in such a manner as to be placed in register with a stiffening rib (44).

## Patentansprüche

1. Behälter (1) für Hydraulikflüssigkeit, mit
- einer Decke (2) und einem Boden (3),
- einer Öffnung (11) zur Versorgung mit Hydraulikflüssigkeit, wobei die Versorgungsöffnung an der Decke angeordnet ist und außerhalb des Behälters mündet, bei dem eine Überlaufschutz-Trennwand (16) im Inneren des Behälters zumindest an der Decke befestigt ist und zumindest teilweise um die Versorgungsöffnung verläuft, **dadurch gekennzeichnet, dass** die Überlaufschutz-Trennwand einen ersten Abschnitt (29), der teilweise um die Versorgungsöffnung verläuft, und einen zweiten Abschnitt (30) aufweist, der entlang des Umfangs (31) des Behälters verläuft.

2. Behälter nach Anspruch 1, **dadurch gekennzeichnet, dass** die Überlaufschutz-Trennwand senkrecht an der Decke des Behälters befestigt ist.

3. Behälter nach Anspruch 1 oder 2, **dadurch gekennzeichnet dass** die Überlaufschutz-Trennwand eine U-Form aufweist.

4. Behälter nach einem der Ansprüche 1 bis 3, **dadurch gekennzeichnet, dass** die Überlaufschutz-Trennwand an einem Boden des Behälters befestigt ist.

5. Behälter nach einem der Ansprüche 1 bis 3, **dadurch gekennzeichnet, dass** die Überlaufschutz-Trennwand lediglich an der Decke des Behälters befestigt ist.

6. Behälter nach einem der Ansprüche 1 bis 5, **dadurch gekennzeichnet, dass** der Behälter eine Wand aufweist, die die Decke mit dem Boden verbindet, wobei die Wand mit Versteifungsrippen (44) versehen ist, die vorzugsweise senkrecht befestigt sind.

7. Behälter nach Anspruch 6, **dadurch gekennzeichnet, dass** der zweite Abschnitt der Überlaufschutz-Trennwand, der um den Umfang des Behälters verläuft, eine Reihe von Wellen (43) aufweist.

8. Behälter nach Anspruch 7, **dadurch gekennzeichnet, dass** jede Welle des zweiten Abschnitts der Überlaufschutz-Trennwand so positioniert ist, dass sie gegenüber einer Versteifungsrippe (44) angeordnet ist.
